# EUROPEAN PATENT APPLICATION

(11) **EP 4 830 810 A1**
(43) Date of publication of application: **28.10.2026**
(21) Application number: 25315137.7
(22) Date of filing: 24.04.2025
(51) Int. Cl.: B01D 45/08, B01D 46/00, B01D 46/12, B01D 50/20, F24F 8/192, H01M 8/04119

(54) **FILTER MODULE FOR A FUEL CELL IN MARITIME ENVIRONMENTS**

(71) Applicant: MANN+HUMMEL GmbH, 71636 Ludwigsburg (DE)
(72) Inventor: CHIAPPINI, Florian, 71636 Ludwigsburg (DE); HEILMANN, Tanja, 71636 Ludwigsburg (DE); HARENBROCK, Michael, 71636 Ludwigsburg (DE); WEBER, Andreas, 71636 Ludwigsburg (DE)
(74) Representative: Mann + Hummel Intellectual Property

(57) **Abstract**

The invention refers to a filter module, in particular for use as a cathode air filter of a fuel cell in maritime environments. The filter module comprises a water separator and a particle filter downstream thereof. Advantageously, an electric precipitator is arranged between the water separator and the particle filter. The water separator retains heavier contaminants such as water droplets or heavy dust particles. The electric precipitator is particularly efficient in capturing salt contaminants, be it in the form of wet salt grains or salt dissolved in water droplets. The particle filter may act as a fine filter for removing fine particles from the airflow. Finally, gaseous contaminants may be captured in by an adsorber medium.

## Description

### Technical field

The present invention refers to a filter module, in particular for filtering intake air for a fuel cell, the filter module comprising an air duct and a particle filter.

### Background

A device of this type is known from KR 2024 0074462 A or CN 113972386 A.

In various applications, air filtration is required. For instance, fuel cells typically require purified air to be supply to a cathode, since particles or gaseous impurities may damage the cathode and degrade fuel cell performance. In maritime applications or with fuel cells being operated at a seashore, the presence of salt in the air poses additional problems for air purification.

KR 2024 0074462 A discloses an air desalination and dehumidification apparatus. Upstream of a filter, two heat exchange units are installed in a heat exchange room. The heat exchange units cause moisture in the air to condense, so the (condensed) moisture or water is separated from the air. The condensate generated by the heat exchanger units may be used to wash the filter. However, operation of the heat exchange units causes power consumption. Furthermore, the heat exchange units add complexity and costs to the apparatus. The added complexity further results in higher likelihood of malfunctions.

A system for detecting and desalting salt content in cathode air intake of a marine fuel cell is known from CN 113972386 A. The system comprises a primary air filter having a pore size of 25 microns and a medium efficiency air filter having a pore size of 5 microns. A compressor, an intercooler and a gas storage tank are installed between the filters. However, the primary air filter at the air inlet side of the compressor is prone to clogging if the intake air comprises sufficient water or moisture.

US 2007/087260 A1 discloses diffusion media for use in proton exchange media fuel cells, which are provided with silicone coatings. The media are made of a porous electro-conductive substrate, a first hydrophobic fluorocarbon polymer coating adhered to the substrate, and a second coating comprising a hydrophobic silicone polymer adhered to the substrate. The substrate is preferably a carbon fiber paper, the hydrophobic fluorocarbon polymer is PTFE or similar polymer, and the silicone is moisture curable.

It is an object of the invention to provide for efficient and durable filtration of cathode air for a fuel cell, in particular requiring low operational costs and little and easy to perform maintenance.

This is achieved by a filter module according to claim 1 and a fuel cell according to claim 15. Advantageous embodiments are given in the subclaims and the description.

### Disclosure of the invention

In accordance with the invention, a filter module is provided. The filter module may be used for filtering intake air for a fuel cell. The filter module may be used in maritime or other humid environments.

The filter module comprises an air duct, a particle filter and a mechanical water separator. The particle filter and the water separator are housed inside the air duct. The air duct may be referred to as a housing of the filter module.

The air duct guides air to be filtered through the water separator and the particle filter. The air duct typically has an air inlet. Ambient air may be introduced into the air duct through the air inlet. The air duct typically has an air outlet. Purified air may be supplied to the fuel cell or any other device through the air outlet.

According to the invention, the water separator is arranged upstream of the particle filter inside the air duct. The water separator serves to remove water droplets from the airflow. In high humidity environments, the water separator may also remove water vapor from the airflow. Thus, the particle filter is supplied with pre-dried air. This may enhance particle filtration efficiency at the particle filter, prevent clogging, reduce degradation of a filter medium and/or prolong the particle filter's service life. Furthermore, larger particles may be captured in the water separator.

The particle filter may comprise a filter medium. The filter medium may be a paper or a nonwoven.

The particle filter may comprise a multi-layered filter medium. Multi-layered filter media are particularly efficient for capturing fine particles.

The particle filter may comprise two or more filter medium bodies for consecutive air filtration. High retention rates of fine particles may be achieved with a fine down-stream filter medium body, while a coarser up-stream filter medium body retains larger particles and prevents premature clogging of the fine filter medium body.

Advantageously, the filter medium is coated with a hydrophobic material. The hydrophobic coating further enhances durability and functionality of the particle filter, if subject to humid air.

The hydrophobic material may be Polytetrafluoroethylene (PTFE), Polyvinylidene Fluoride (PVDF), Fluorinated Alkyl Silane (FAS) Nanocoating, Silica-Based Hydrophobic Coating (SiO₂ Nanocoating), Hydrophobic Graphene Coating or Fluorinated Polyurethane Coating.

PTFE (Polytetrafluoroethylene) coating may employ expanded PTFE. PTFE coating has high hydrophobicity, chemical resistance, and long lifespan. PTFE may be applied by spray coating or dipping followed by thermal treatment. PTFE is best suited for low-maintenance and long-term efficiency in humid environments.

PVDF (Polyvinylidene Fluoride) coating may employ Solef^{®} PVDF (Solvay). PVDF has excellent salt and UV resistance, and is durable under extreme conditions. PVDF may be applied by spray or dip coating with controlled curing. PVDF is best suited for high-durability marine applications.

Fluorinated Alkyl Silane (FAS) Nanocoating may employ Aculon^{®} NanoProof, or NeverWet^{®} (Rust-Oleum). FAS Nanocoating is superhydrophobic (contact angle >150°), and has self-cleaning properties. FAS Nanocoating may be applied by Chemical Vapor Deposition (CVD) or immersion. FAS Nanocoating is best suited for ultra-water-repellent protection and minimizing salt accumulation.

Silica-Based Hydrophobic Coating (SiO₂ Nanocoating) may employ Ultra Ever Dry^{®}, or SiO₂ coatings by P2i. SiO₂ Nanocoating has high water-repelling properties, antifouling properties, and allows for thin layer application. SiO₂ Nanocoating may be applied as a spray aerosol or by plasma-enhanced CVD. SiO₂ Nanocoating is best suited for harsh marine environments with salt-heavy exposure.

Hydrophobic Graphene Coating may use advanced coatings developed by Graphene Flagship, MIT, Rice University. Hydrophobic Graphene Coating provides corrosion resistance, thermal stability, and allows for ultra-thin conductive layer. Hydrophobic Graphene Coating may be applied by electrostatic spray deposition or CVD. Hydrophobic Graphene Coating is best suited for high-tech applications requiring extreme durability.

Fluorinated Polyurethane coating may be FluoroThane^{™}, or PPG Hydrophobic Coatings. Fluorinated Polyurethane coating provides a robust barrier against salt and humidity, and allows for easy application. Fluorinated Polyurethane may be applied as paint-on or by dipping with polymerization curing. Fluorinated Polyurethane coating is best suited for simple, scalable protection against moisture.

Particularly advantageous are PTFE for being a proven technology, and requiring low maintenance; PVDF for having high resistance in harsh conditions; and FAS Nanocoating for having superhydrophobic and self-cleaning properties for extreme marine settings.

The water separator may comprise several baffles for separating water from an airflow passing between the baffles. The baffles may define an impactor grid or a lattice. Water droplets in the airflow will impact the baffles and will flow downward along the baffles. Collected water may be drained through a drain opening.

Adjacent baffles may delimit flow channels, in particular wherein each flow channel causes the airflow to depart from a main direction of the air duct, in at least one local flow direction, advantageously at least two different local flow directions. Thus, the baffles bock straight airflow. This enhances water separation due to the higher inertia of water droplets as compared to air. The baffles may be angled plates.

The particle filter may be a HEPA-filter of at least class H13 according to **EN** 1822-1:2019. Such a HEPA-filter retains fine particles for enhanced protection of a fuel cell cathode.

The particle filter may achieve a filtration efficiency of at least 99.7% for particles having a size of at least 0.3 µm.

Advantageously, an electric precipitator is arranged between the water separator and the particle filter. The electric precipitator may be an electrostatic precipitator. In use, the electric precipitator generates an electric field. The electric field deflects particles, such as salt particles or fine dust so they are retained in the electric precipitator. The electric precipitator is very efficient in capturing fine particles. The electric precipitator is particular useful in capturing wet salt particles or salt droplets, which are formed at high humidity levels. The electric precipitator does not significantly increase pressure drop over the filter module. Due to the removal of particles in the electric precipitator before they reach the particle filter, the overall energy efficiency of the filter module may be increased despite requiring generation of the electric field. By providing the electric precipitator, service life of the particle filter may be prolonged. This reduces downtime of a system comprising the filter module due to reduced operational interruptions for particle filter replacement. Further, higher filtration efficiency may be obtained.

The electric precipitator may comprise two electrodes for generating an electric field, in particular an electrostatic field. This allows for a simple, durable and cost-efficient design. The electric field may deflect particles to the electrodes, where they are accumulated.

The electrodes may be connected to an electric power supply of the filter module. The power supply allows for generation of the electric field.

The electrodes may be arranged at opposite walls of the air duct. This allows for simple and robust mounting of the electrodes. Further, the open cross section of the air duct is not reduced significantly. Thus, pressure loss across the electric precipitator is reduced.

The electric precipitator, in particular its electrodes, may have a hydrophobic coating. The hydrophobic coating prevents particles and moisture from building up. Consistent generation of the electric field and hence particle removal are supported. Further, the hydrophobic coating allows for simple cleaning of the electric precipitator.

The types and advantages of hydrophobic coating materials described above with reference to the particle filter do also apply for hydrophobic coating of the electric precipitator. In particular, the hydrophobic material for coating the electric precipitator may be Polytetrafluoroethylene (PTFE), Polyvinylidene Fluoride (PVDF), Fluorinated Alkyl Silane (FAS) Nanocoating, Silica-Based Hydrophobic Coating (SiO₂ Nanocoating), Hydrophobic Graphene Coating or Fluorinated Polyurethane Coating.

A maintenance door may be provided in the air duct adjacent to the electric precipitator. By opening the maintenance door, the electric precipitator is accessible for cleaning. Cleaning can efficiently be done by water rinsing, compressed air jets, mechanical vibration, or wiping.

The particle filter may be washable. This allows for simple cleaning and reuse of the particle filter once it is clogged. Hydrophobic coating of the filter medium may allow the particle filter being washed.

A monitoring system could be employed to determine when the particle filter needs being washed or replaced. For instance, pressure drop, particle load, and/or filter performance might be monitored, in particular in real time.

The particle filter may be detachably held in the air duct. This allows for simple removal and installation of the particle filter. The particle filter may be replaced once its service life is over. A washable particle filter may be removed for washing and reinstalled thereafter.

A body of active material, in particular an adsorber material body, may be arranged downstream of the particle filter. The active material serves to remove gaseous contaminants, which for instance might degrade fuel cell performance. The active material may comprise activated carbon, molecular sieves, silicates, and/or adsorbent polymers.

The invention further refers to a fuel cell comprising a cathode, an anode, and an electrolyte arranged between the cathode and the anode. The fuel cell further comprises a filter module according to the invention, as described above, in particular wherein the filter module is arranged at an air inlet of the cathode. In other words, the air outlet of the air duct may be connected to the cathode air inlet or serve as the cathode air inlet. The filter module according to the invention efficiently prevents ingress of particles, salt (being solved in water droplets or in form of solid particles) and moisture (in particular water droplets but also water vapor) into the fuel cell. This is particularly useful if the fuel cell is used in marine environments, such as ships, submarines, offshore platforms, coastal facilities or harbor machinery. By using the filter module, the efficiency and reliability of maritime fuel cell systems may be significantly enhanced, since salt particles might cause significant damage to the cathode. The invention can also apply to air filtration technology for automotive fuel cell systems.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a filter module according to the invention, comprising a mechanical water separator, an electrostatic precipitator, a particle filter and an active material body, consecutively arranged in an air duct, in a schematic sectional view;
- Fig. 2: shows an exemplary mechanical water separator for the filter module of Fig. 1, in a schematic horizontal section;
- Fig. 3: shows a fuel cell according to the invention with the filter module of Fig. 1 arranged at a cathode air inlet, in a schematic sectional view.

### Detailed description

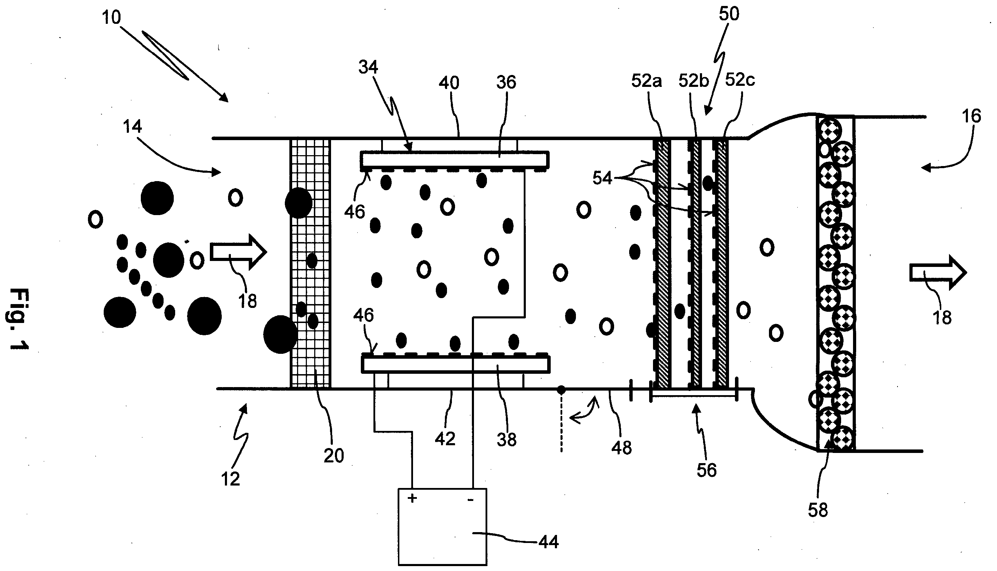

**Figure 1** shows a filter module **10.** The filter module 10 comprises an air duct **12,** defining an air inlet **14** and an air outlet **16.** The main direction of airflow through the filter module is indicated by arrows **18.** The air duct 12 may also be referred to as a housing of the filter module 10. The air duct 12 may have a rectangular cross section.

The filter module 10 comprises a mechanical water separator **20,** which is arranged next to the air inlet 14. Water droplets and some larger particles are captured in the water separator 20 and removed from the airflow.

In Figure 1, solid and liquid contaminants of the airflow are depicted with filled circles. Hollow circles indicate gaseous contaminants.

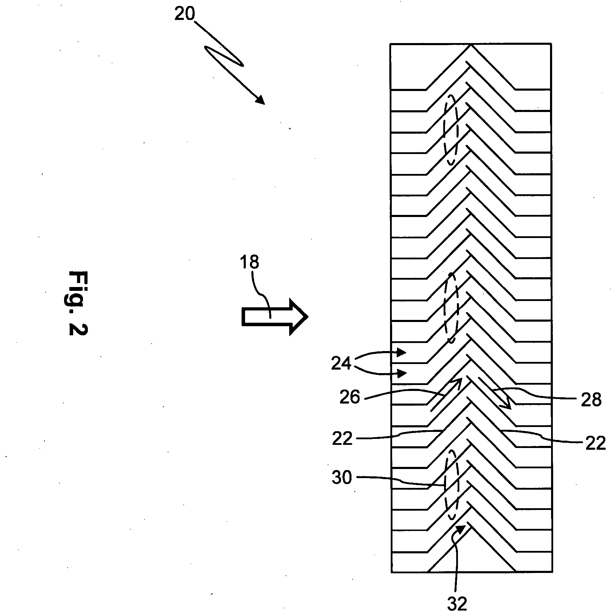

The water separator 20 is depicted in more detail in **Figure 2****.** The water separator comprises several corrugated baffles **22,** defining angled flow channels **24** therebetween. The shape of the baffles 22 and flow channels 24 makes the airflow depart from its main direction 18, first in a first local flow direction **26,** then in a second local flow direction **28,** and finally back into the main direction 18. By enforcing sharp changes of direction, water droplets and larger particles will hit the baffles and run or fall downward, where they may be purged through drain openings **30.** Protruding separation hooks **32,** which may be arranged at edges of the baffles 22, may enhance separation efficiency.

Downstream of the water separator 20, an electric precipitator **34** is arranged inside the air duct 12, see Figure 1. The electric precipitator 34 comprises two electrodes **36, 38,** which are plate shaped (they extend perpendicular to the drawing plane of Figure 1). The electrodes 36, 38 are attached to opposite walls **40, 42** of the rectangular air duct 12. An electric power supply **44** is connected to the electrodes 36, 38 in order to invoke an electric field, in this embodiment an electrostatic field, between the electrodes 36, 38. In this embodiment, the electric precipitator 34 is thus an electrostatic precipitator.

The electric field of the precipitator makes electrically charged or chargeable droplets and particles travel to one of the electrodes 36, 38, depending on the droplet or particle having negative or positive charge. To prevent formation of a cake of dirt on the electrodes 36, 38 and in order to facilitate cleaning, a hydrophobic coating **46** is provided on the surface of the electrodes 36, 38. The hydrographic coating 46 is indicated by dashed lines in Figure 1 for illustrational purpose, while it is understood that the coating generally extends over the entire surface without interruptions. The hydrographic coating 46 may be a polyvinylidene fluoride coating, for example.

For cleaning of the electrodes 36, 38, the precipitator 34 is accessible through a maintenance door **48,** which may be provided in one of the walls 42 of the air duct 12. The maintenance door 48 is shown in the closed state in Figure 1; a dashed line indicates the open state. When the maintenance door 48 is open, cleaning equipment may be introduced in order to clean the electrodes 36, 38, e.g. by rinsing with water, blowing with pressurized air, and/or wiping.

Downstream of the electric precipitator 34, a particle filter **50** is arranged inside the air duct 12. In this embodiment, the particle filter 50 comprises three filter media bodies **52a, 52b, 52c** arranged for successive cleaning of the airflow. Filtration media of the filter media bodies 52a-52c may be filter paper or nonwoven material, which may be pleated. The filter media may be successively finer in direction of the airflow 18. The particle filter 50 is a HEPA filter, in this embodiment.

A hydrophobic coating **54** is applied to the filter media. For reasons of clarity, the hydrophobic coating 54 is indicated with dashed lines on the upstream faces of the filter media bodies 52a-52c; however, it is understood, that advantageously the filter media are entirely coated with hydrophobic material, i.e. the coating may surround fibers of the filter media. The hydrophobic material may be PTFE. Hydrophobic coating increases resistance of the filter media to moisture. While the water separator significantly reduces humidity of the airflow, it is realized that in particular water vapor or even smaller water droplets might still be carried in the airflow when passing through the particle filter 50.

The particle filter 50 - in this embodiment the unit comprising the filter media bodies 52a-52c - is detachably held in the air duct 12. A cover **56** of the air duct 12 permits removing and installing the particle filter 50.

In an advantageous embodiment, the particle filter 50 is washable. In this case, the particle filter 50 need not be disposed once clogged, but can be removed from the air duct 12 for cleaning, e.g. by rinsing with water. Thereafter, the particle filter 50 is reinstalled for continued use.

It is realized that the particle filter 50 generally will not retain gaseous contaminants from the airflow, but primarily solid particles. To remove such harmful gases, an adsorber material body **58** is provided downstream of the particle filter 50 inside the air duct 12. The adsorber material body 58 contains active material such as activated carbon. The adsorber material removes the gaseous contaminants form the airflow, which passes through.

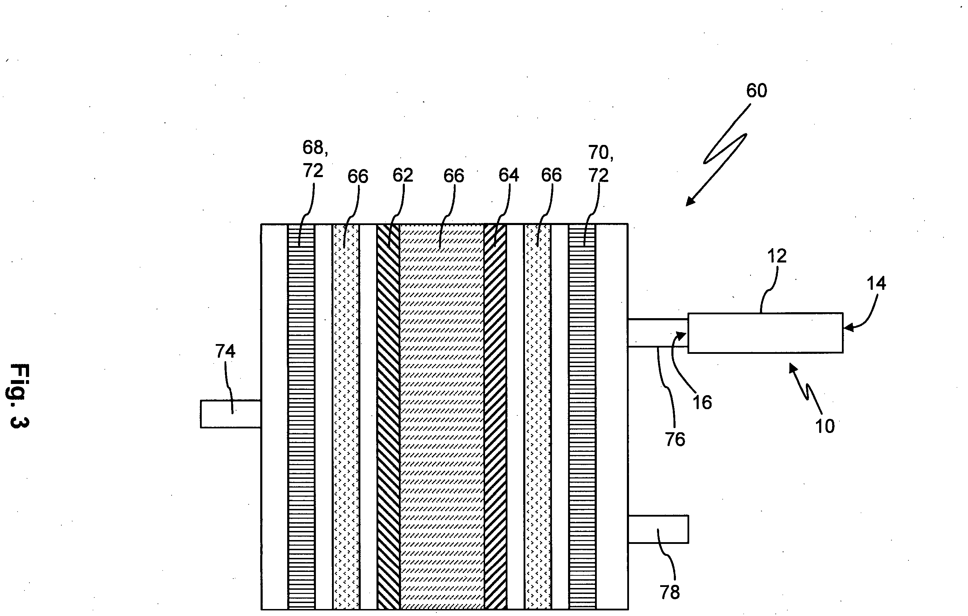

The filter module 10 may serve to provide clean to a fuel cell 60, see Figure 3.

The fuel cell 60 has an anode **62,** a cathode **64** and an electrolyte **66** arranged between them. The anode 62 and the cathode 64 can each adjoin a gas diffusion layer **66.** The anode 62 and the cathode 64 can be accommodated between side parts **68, 70** of a bipolar plate **72.** Hydrogen can be conducted from a hydrogen inlet **74** to the anode 62 through the side part 68 of the bipolar plate 72. Oxygen or air containing oxygen can be conducted through the side part 70 of the bipolar plate 72 from an air inlet **76** of the fuel cell 60 to the cathode 64. The air outlet 16 of the filter module 10 is connected to the cathode air inlet 76. Thus, the filter module 10 is used as a cathode air filter. Water produced in the fuel cell 60 can be discharged through a water outlet **78.** Electrical connections of the fuel cell 186 are not shown in detail.

In summary, the invention relates to a filter module, in particular for use as a cathode air filter of a fuel cell in maritime environments. The filter module comprises a water separator and a particle filter downstream thereof. Advantageously, an electric precipitator is arranged between the water separator and the particle filter. The water separator retains heavier contaminants such as water droplets or heavy dust particles. The electric precipitator is particularly efficient in capturing salt contaminants, be it in the form of wet salt grains or salt dissolved in water droplets. The particle filter may act as a fine filter for removing fine particles from the airflow. Finally, gaseous contaminants may be captured in by an adsorber medium. The water separator, electric precipitator and particle filter shed the adsorber medium from moisture, which might impair its adsorption efficiency.

### List of Reference Numbers

Filter module **10**
Air duct **12**
Air inlet **14** of air duct **12**
Air outlet **16 of** air duct **12**
Main airflow direction **18**
Water separator **20**
Baffles **22**
Flow channels **24**
First local flow direction **26**
Second local flow direction **28**
Drain openings **30**
Separation hooks **32**
Electric precipitator **34**
Electrodes **36, 38**
Walls **40, 42**
Electric power supply **44**
Hydrophobic coating **46** of precipitator 34
Maintenance door **48**
Particle filter **50**
Filter media bodies **52a, 52b, 52c**
Hydrophobic coating **54** of filter 50
Cover **56**
Adsorber material body **58**
Anode **62**
Cathode **64**
Electrolyte **66**
Gas diffusion layer **66**
Side parts 68, **70**
Bipolar plate **72**
Hydrogen inlet **74**
Air inlet **76** of the fuel cell 60
Water outlet **78**

## Claims

1. Filter module (10), in particular for filtering intake air for a fuel cell (60), the filter module (10) comprising an air duct (12), a particle filter (50) and a mechanical water separator (20), wherein the water separator (20) is arranged upstream of the particle filter (50) inside the air duct (12).

2. Filter module (10) according to claim 1, wherein the particle filter (50) comprises a filter medium having a hydrophobic coating (54).

3. Filter module (10) according to any one of the preceding claims, wherein the water separator (20) comprises several baffles (22) for separating water from an airflow passing between the baffles (22).

4. Filter module (10) according to claim 3, wherein adjacent baffles (22) delimit flow channels (24), in particular wherein each flow channel (24) causes the airflow to depart from a main direction (18) of the air duct (12), in at least one local flow direction (26, 28), or at least two different local flow directions (26, 28).

5. Filter module (10) according to one of the preceding claims, wherein the particle filter (50) is a HEPA-filter of at least class H13 according to EN 1822-1:2019.

6. Filter module (10) according to one of the preceding claims, wherein an electric precipitator (34) is arranged between the water separator (20) and the particle filter (50).

7. Filter module (10) according to claim 6, wherein the electric precipitator (34) comprises two electrodes (36, 38) for generating an electric field, in particular an electrostatic field.

8. Filter module (10) according to claim 7, wherein the electrodes are connected to an electric power supply (44).

9. Filter module (10) according to claim 6 or 7, wherein the electrodes (36, 38) are arranged at opposite walls (40, 42) of the air duct (12).

10. Filter module (10) according to any one of claims 6 to 9, wherein the electric precipitator (34), in particular its electrodes (36, 38), have a hydrophobic coating (46).

11. Filter module (10) according to any one of claims 6 to 10, wherein a maintenance door (48) is provided in the air duct (12) adjacent to the electric precipitator (34).

12. Filter module (10) according to any one of the preceding claims, wherein the particle filter (50) is washable.

13. Filter module (10) according to any one of the preceding claims, wherein the particle filter (50) is detachably held in the air duct (12).

14. Filter module (10) according to one of the preceding claims, wherein a body of active material, in particular an adsorber material body (58), is arranged downstream of the particle filter (50).

15. Fuel cell (60) comprising a cathode (64), an anode (62), and an electrolyte (66) arranged between the cathode (64) and the anode (62), the fuel cell (60) further comprising a filter module (10) according to any one of the preceding claims, in particular wherein the filter module (10) is arranged at an air inlet (76) of the cathode (64).
